(19) Europäisches Patentamt / European Patent Office / Office européen des brevets

(11) **EP 4 546 493 A1**

(12) **EUROPEAN PATENT APPLICATION**
published in accordance with Art. 153(4) EPC


(43) Date of publication:
**30.04.2025 Bulletin 2025/18**

(21) Application number: **23857652.4**

(22) Date of filing: **18.08.2023**

(51) International Patent Classification (IPC):
***H01M 10/058*** *(2010.01)* ***H01M 4/131*** *(2010.01)*
***H01M 4/1391*** *(2010.01)* ***H01M 4/04*** *(2006.01)*
***H01M 10/052*** *(2010.01)* ***H01M 4/38*** *(2006.01)*

(52) Cooperative Patent Classification (CPC):
**H01M 4/04; H01M 4/131; H01M 4/1391; H01M 4/38; H01M 10/052; H01M 10/058;**
Y02E 60/10; Y02P 70/50

(86) International application number:
**PCT/KR2023/012229**

(87) International publication number:
**WO 2024/043618 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.08.2022 KR 20220106403**



(71) Applicant: **LG Energy Solution, Ltd.**
**Seoul 07335 (KR)**

(72) Inventors:
- **JEON, Seo Young**
  **Daejeon 34122 (KR)**
- **KIM, Sa Rah**
  **Daejeon 34122 (KR)**
- **KWON, Yo Han**
  **Daejeon 34122 (KR)**

(74) Representative: **Hoffmann Eitle**
**Patent- und Rechtsanwälte PartmbB**
**Arabellastraße 30**
**81925 München (DE)**


(54) **LITHIUM SECONDARY BATTERY AND METHOD FOR MANUFACTURING LITHIUM SECONDARY BATTERY**


(57) The present disclosure relates to a lithium secondary battery and a method of preparing the lithium secondary battery, wherein the lithium secondary battery includes a positive electrode including a positive electrode current collector and a positive electrode active material layer disposed on the positive electrode current collector; a negative electrode including a negative electrode current collector, a negative electrode active material layer disposed on the negative electrode current collector, and a solid electrolyte layer disposed on the negative electrode active material layer; a separator disposed between the positive electrode and the negative electrode; and the electrolyte, wherein an A value according to Equation 1 may be 10% or more.

[Equation 1]

$$A = \{(F+C)/(F+C+G+M+E)\} \times 100$$

F and C are a content (unit: $\mu g/cm^2$) of a fluoride group and a content (unit: $\mu g/cm^2$) of a carbonate group, which are confirmed by capillary electrophoresis (CE) analysis of the solid electrolyte layer, respectively, and G, M, and E are a content (unit: $\mu g/cm^2$) of an ethylene glycol group, a content (unit: $\mu g/cm^2$) of a methyl group, and a content (unit: $\mu g/cm^2$) of an ethyl group, which are confirmed by nuclear magnetic resonance (NMR) spectroscopic analysis of the solid electrolyte layer, respectively.


FIG. 1

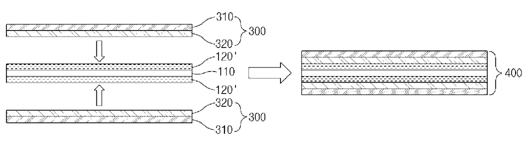


EP 4 546 493 A1

## Description

## TECHNICAL FIELD

Cross-reference to Related Applications

This application claims priority from Korean Patent Application No. 10-2022-0106403, filed on August 24, 2022, the disclosure of which is incorporated by reference herein.

Technical Field

The present disclosure relates to a lithium secondary battery and a method of preparing the lithium secondary battery, and relates to technical features such as a composition of a solid electrolyte layer disposed on a surface of a negative electrode, transfer of a lithium metal layer to a positive electrode, and charging at a specific current rate during an activation process.

## BACKGROUND ART

Requirements for the use of alternative energy or clean energy have increased due to the rapid increase in the use of fossil fuels, and, as a part of this trend, power generation and electricity storage using an electrochemical reaction are the most actively researched areas.

Currently, a typical example of an electrochemical device using the electrochemical energy may be a secondary battery and there is a trend that its usage area is expanding more and more. In recent years, demand for ion secondary batteries as an energy source has been significantly increased as technology development and demand with respect to portable devices, such as portable computers, mobile phones, and cameras, have increased, and, among these secondary batteries, lithium ion secondary batteries having high energy density, i.e., high capacity have been subjected to considerable research and have been commercialized and widely used.

In general, a lithium secondary battery is composed of a positive electrode, a negative electrode, an electrolyte, and a separator. The negative electrode includes a negative electrode active material in which lithium ions released from the positive electrode are intercalated and deintercalated, and silicon-based active material particles having large discharge capacity may be used as the negative electrode active material. The silicon-based active material particle may correspond to silicon (Si) or $SiO_x$ ($0<x<2$). The silicon-based active material particle has an advantage of large theoretical capacity and low price. However, since the silicon-based active material particle has an excessively large volume change during battery operation, it is disadvantageous in that lifetime of the battery is rapidly decreased as the battery is cycled.

Thus, in order to minimize the volume change of the silicon-based active material particle, there is a method of using only a portion of total capacity of the silicon-based active material particles. For this purpose, a so-called pre-lithiation process is used in which lithium ions are intercalated into the negative electrode including the silicon-based active material particles in advance. Specifically, if the lithium ions are intercalated into the negative electrode by a method such as transferring lithium metal to the negative electrode, total capacity of the negative electrode may be reduced to a level of reversible capacity as the lithium ions react at irreversible sites of the negative electrode. Thus, since an amount of the lithium ions intercalated during battery operation may be suitably reduced to a level required for the battery operation, the volume change of the silicon-based active material particles may be minimized.

However, in the process of performing pre-lithiation by disposing the lithium metal on a surface of the negative electrode, excessive heat is generated due to an alloy reaction between lithium and silicon, and a possibility of ignition due to a reaction between the lithium and moisture also increases. Also, in a process of notching and punching the negative electrode, a reaction area between the lithium and the silicon-based active material may be increased to further increase the possibility of ignition. Furthermore, there is also a possibility of ignition caused by the pre-lithiated silicon-based active material particles.

Therefore, there is a need for a new technique which may suppress the possibility of excessive heat generation and ignition while improving the lifetime of the battery by intercalating lithium ions into the negative electrode in advance before battery operation.

## DISCLOSURE OF THE DISCLOSURE

## TECHNICAL PROBLEM

An aspect of the present disclosure provides a lithium secondary battery having improved life characteristics and

safety and low resistance.

Another aspect of the present disclosure provides a method of preparing the lithium secondary battery.

## TECHNICAL SOLUTION

According to an aspect of the present disclosure, there is provided a lithium secondary battery which includes a positive electrode including a positive electrode current collector and a positive electrode active material layer disposed on the positive electrode current collector; a negative electrode including a negative electrode current collector, a negative electrode active material layer disposed on the negative electrode current collector, and a solid electrolyte layer disposed on the negative electrode active material layer; a separator disposed between the positive electrode and the negative electrode; and the electrolyte, wherein an A value according to Equation 1 is 10% or more.

[Equation 1]

$$\{(F+C)/(F+C+G+M+E)\} \times 100$$

wherein F and C are a content (unit: $\mu g/cm^2$) of a fluoride group and a content (unit: $\mu g/cm^2$) of a carbonate group, which are confirmed by capillary electrophoresis (CE) analysis of the solid electrolyte layer, respectively, and G, M, and E are a content (unit: $\mu g/cm^2$) of an ethylene glycol group, a content (unit: $\mu g/cm^2$) of a methyl group, and a content (unit: $\mu g/cm^2$) of an ethyl group, which are confirmed by nuclear magnetic resonance (NMR) spectroscopic analysis of the solid electrolyte layer, respectively.

According to another aspect of the present disclosure, there is provided a method of preparing a lithium secondary battery which includes: a step B1 of preparing a preliminary lithium secondary battery which includes a positive electrode including a positive electrode current collector and a positive electrode active material layer disposed on the positive electrode current collector; a negative electrode including a negative electrode current collector, a negative electrode active material layer disposed on the negative electrode current collector, and a solid electrolyte layer disposed on the negative electrode active material layer; a separator disposed between the positive electrode and the negative electrode; and the electrolyte, and a step B2 of activating the preliminary lithium secondary battery, wherein a method of preparing the positive electrode includes a step P1 of disposing a transfer stack, which includes a base film and a lithium metal layer disposed on the base film, on a preliminary positive electrode including a preliminary positive electrode active material layer to form a positive electrode structure such that the lithium metal layer and the preliminary positive electrode active material layer are in contact with each other; a step P2 of rolling the positive electrode structure; and a step P3 of preparing a positive electrode by removing the base film from the transfer stack after the rolling, wherein step B2 includes charging the preliminary lithium secondary battery by applying a current to the preliminary lithium secondary battery at a current rate of 0.1 C to 1.0 C.

## ADVANTAGEOUS EFFECTS

In a positive electrode according to the present disclosure, a lithium metal layer is disposed on the positive electrode through a transfer method, and lithium ions of the lithium metal layer are intercalated into a positive electrode active material layer by a rolling process. If a preliminary lithium secondary battery is prepared by using the positive electrode that is prepared by the method as described above and the preliminary lithium secondary battery is activated, since the lithium ions intercalated into the positive electrode are transferred to a negative electrode, the lithium ions react and fill irreversible sites of the negative electrode. Accordingly, an amount of the lithium ions intercalated into the negative electrode during battery operation may be suitably reduced to a level required for the battery operation. Thus, since an available range of negative electrode capacity may be reduced while maintaining capacity of the battery, an excessive volume change of silicon-based active material particles may be suppressed and life characteristics of the battery may be improved.

Also, since pre-lithiation is not performed by contacting the lithium metal layer to the negative electrode, but the lithium metal layer is transferred to the positive electrode and rolled and the lithium ions intercalated into the positive electrode are then transferred to the negative electrode in an activation process of the battery, a phenomenon of excessive heat generation due to an alloy reaction of lithium and silicon at the negative electrode may be avoided and a possibility of ignition due to a reaction between the lithium and moisture may be significantly reduced. Furthermore, since the lithium ions are not intercalated into the negative electrode during notching and punching the negative electrode (because the pre-lithiation has not progressed), a possibility of ignition during the notching and punching process may be significantly reduced.

Particularly, in the activation process in the present disclosure, a cracking phenomenon of the negative electrode active material particles may be minimized by adjusting a rate of current applied during charge to an appropriate level. Also,

since the rate of the current applied during charge is adjusted to the appropriate level, a ratio of a fluoride group and a carbonate group in a solid electrolyte layer may be high. Accordingly, since structural stability of the negative electrode may be maintained despite the large volume change of the negative electrode active material particles and the solid electrolyte layer may not be thick, an increase in battery resistance may be suppressed. Thus, initial capacity and life characteristics of the battery may be improved.

## BRIEF DESCRIPTION OF THE DRAWINGS

FIG. 1 is a schematic view illustrating step P1 in a method of preparing a positive electrode according to an aspect of the present disclosure.

FIG. 2 is a schematic view illustrating step P1 using a transfer stack including a polymer layer in the method of preparing a positive electrode according to the aspect of the present disclosure.

FIG. 3 is a schematic view illustrating step P2 in the method of preparing a positive electrode according to the aspect of the present disclosure.

FIG. 4 is a schematic view illustrating step P3 in the method of preparing a positive electrode according to the aspect of the present disclosure.

## MODE FOR CARRYING OUT THE DISCLOSURE

Hereinafter, the present disclosure will be described in more detail to allow for a clearer understanding of the present disclosure.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the disclosure, based on the principle that an inventor may properly define the meaning of the words or terms to best explain the disclosure.

The terminology used herein is for the purpose of describing particular example aspects only and is not intended to be limiting of the present disclosure. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

$D_{50}$ in the present specification may be defined as a particle diameter at a cumulative volume of 50% in a particle size distribution curve. The $D_{50}$, for example, may be measured by using a laser diffraction method. The laser diffraction method may generally measure a particle diameter ranging from a submicron level to a few mm and may obtain highly repeatable and high-resolution results.

X-ray diffraction (XRD) measurement in this specification was performed as follows.

An X-ray wavelength generated from copper (Cu) K$\alpha$ was used, and a wavelength ($\lambda$) of a light source was 0.15406 nm.

1) Measurement Device and Conditions: Bruker D8 Endeavor (Cu target 40kV, 40mA, 1.54 Å) LynxEye position sensitive detector (4.1° slit)

2) Experimental Process

   2-1) Prep. Cutting/Cross-section: Make a specimen by cutting a sample to a size of a sample holder.

   2-2) Prep. Sample Mounting: Attach the sample (positive electrode) to a glass plate using a double-sided tape such that there is no gap therebetween and then mount it using rubber clay and a holder formed of PMMA.

   2-3) Powder XRD (Bruker D8 Endeavor): Adjust a fixed divergence slit (FDS) to 0.5° according to a sample size, and powder XRD is measured every 0.0156° for 0.3 seconds in a 2$\theta$ range of 10° to 125°.

   2-4) XRD Phase Analysis: Identify phases present in the sample by comparing them with database (PDF).

   2-5) Rietveld Analysis: Rietveld refinement is performed using a complete structure model of the phases present in the sample.

In this specification, measurement conditions for laser-induced breakdown spectroscopy (LIBS) analysis are as follows. J200 (Tandem-LA-LIBS) by Applied Spectra, Inc. was used for the LIBS. Thereafter, when an instrument temperature reached -20°C, measurements were made under the following conditions.

- Laser Power: 20%
- Spot size: 150 μm
- Shot number: 15 shot
- Spot number: 6×6
- Gate delay: 1 μsec
- Rep rate: 5 Hz
- Analytical mode: Mapping & Depth profiling experiment

In this specification, an ethylene glycol group content, an ethyl group content, and a methyl group content in a solid electrolyte layer were confirmed by checking a peak integral value of the corresponding functional group, which was measured through 1H-NMR analysis, and considering molecular weights of ethylene glycol, ethanol, and methanol, respectively. Herein, the 1H-NMR analysis is performed using 500 MHz $^{1}H$ NMR by Varian, Inc.

In this specification, a content of a fluoride group and a content of a carbonate group were each confirmed through capillary electrophoresis (CE) analysis. Specifically, after running an instrument (MDQ plus by AB SCIEX Pte. Ltd.), the analysis was performed. In this case, since there was a phenomenon in which a MeOD (Methanol d4) extraction solution absorbed $CO_2$ in the atmosphere to increase $CO_3^{2-}$, a sample was stored in a G/B (Glove box) and then removed to the atmosphere and the analysis was immediately performed during measurement. The content of the fluoride group and the content of the carbonate group were determined from the measured CE areas.

The samples used for the $^{1}H$-NMR and CE analyses were prepared as follows. A lithium secondary battery prepared through activation was fully charged and then discharged from 4.2 V to 2.5 V to perform initial discharge. Thereafter, only a negative electrode was separated and washed with dimethyl carbonate (DMC). A solid electrolyte layer extracted from the negative electrode was dissolved in MeOD (Methanol d4) and then used as the sample for $^{1}H$-NMR measurement. Thereafter, the sample was dissolved once more in deuterium oxide and used as the sample for the CE analysis.

**<Lithium Secondary Battery>**

A lithium secondary battery according to an aspect of the present disclosure includes a positive electrode including a positive electrode current collector and a positive electrode active material layer disposed on the positive electrode current collector; a negative electrode including a negative electrode current collector, a negative electrode active material layer disposed on the negative electrode current collector, and a solid electrolyte layer disposed on the negative electrode active material layer; a separator disposed between the positive electrode and the negative electrode; and the electrolyte, wherein an A value according to Equation 1 below may be 10% or more.

[Equation 1]

$$A = \{(F+C)/(F+C+G+M+E)\} \times 100$$

wherein F and C are a content (unit: $\mu g/cm^2$) of a fluoride group and a content (unit: $\mu g/cm^2$) of a carbonate group, which are confirmed by capillary electrophoresis analysis of the solid electrolyte layer, respectively, and G, M, and E are a content (unit: $\mu g/cm^2$) of an ethylene glycol group, a content (unit: $\mu g/cm^2$) of a methyl group, and a content (unit: $\mu g/cm^2$) of an ethyl group, which are confirmed by nuclear magnetic resonance (NMR) spectroscopic analysis of the solid electrolyte layer, respectively.

### (1) Positive Electrode

The positive electrode may include a positive electrode active material layer. The positive electrode active material layer may itself constitute the positive electrode, but the positive electrode active material layer may be disposed on a positive electrode current collector.

The positive electrode current collector is not particularly limited as long as it has conductivity without causing adverse chemical changes in a battery, and, for example, stainless steel, aluminum, nickel, titanium, fired carbon, or aluminum or stainless steel that is surface-treated with one of carbon, nickel, titanium, silver, or the like may be used. Also, the positive electrode current collector may typically have a thickness of 3 μm to 500 μm, and microscopic irregularities may be formed on the surface of the current collector to improve adhesion of the positive electrode active material. The positive electrode current collector, for example, may be used in various shapes such as that of a film, a sheet, a foil, a net, a porous body, a foam body, a non-woven fabric body, and the like.

The positive electrode active material layer may be disposed on one surface or both surfaces of the positive electrode current collector. The positive electrode active material layer may include a positive electrode active material.

The positive electrode active material is a material in a form of a particle which may cause an electrochemical reaction, wherein it may be a lithium transition metal oxide. For example, the positive electrode active material may include at least one selected from the group consisting of a layered compound, such as a lithium cobalt oxide or a lithium nickel oxide, which is substituted with at least one transition metal; a lithium manganese oxide substituted with at least one transition metal; a lithium nickel cobalt manganese composite oxide represented by $Li_{1+x}[Ni_aCo_bMn_cM^1_{(1-a-b-c)}]O_{(2-d)}A_d$ (where, $M^1$ is at least one selected from the group consisting of aluminum (Al), magnesium (Mg), chromium (Cr), titanium (Ti), silicon (Si), and yttrium (Y), A is at least one selected from the group consisting of fluorine (F), phosphorus (P), and chlorine (Cl), and $-0.5 \leq x \leq 0.5$, $0.1 \leq a \leq 1$, $0.05 \leq b \leq 0.5$, $0.05 \leq c \leq 0.5$, $0 \leq d \leq 0.2$, and $0 < a+b+c \leq 1$); a lithium nickel-based oxide represented by $Li\,[Ni_{1-y}M^2_y]O_2$ (where, $M^2$ may be at least one selected from cobalt (Co), manganese (Mn), Al, copper (Cu), iron (Fe), Mg, boron (B), Cr, zinc (Zn), and gallium (Ga), and $0.01 \leq y \leq 0.7$); and an olivine-based lithium metal phosphate represented by $Li_{1+z}[M^3_{1-q}M^4_q]PO_{4-r}X_r$ (where, $M^3$ is at least one selected from the group consisting of Fe, Mn, Co, and nickel (Ni), $M^4$ is at least one selected from the group consisting of Al, Mg, and Ti, X is at least one selected from the group consisting of F, sulfur (S), and nitrogen (N), and $-0.5 \leq z \leq 0.5$, $0 \leq q \leq 0.5$, and $0 \leq r \leq 0.1$).

Specifically, the positive electrode active material may include a layer-structured lithium nickel-based transition metal composite oxide, and the lithium nickel-based transition metal composite oxide may include a compound of Formula 1 below and may more specifically be the compound of Formula 1 below.

[Formula 1] $$Li_{1+x}[Ni_aCo_bMn_cM^1_{(1-a-b-c)}]O_{(2-d)}A_d$$

In Formula 1, $M^1$ is at least one selected from the group consisting of Al, Mg, Cr, Ti, Si, and Y, and may specifically be Al.

A is at least one selected from the group consisting of F, P, and Cl, and may specifically be F.

x may satisfy $-0.5 \leq x \leq 0.5$, specifically, $-0.3 \leq x \leq 0.3$.

a may satisfy $0.6 \leq a < 1$, specifically, $0.7 \leq a \leq 0.9$.

b may satisfy $0.03 \leq b \leq 0.1$, specifically, $0.05 \leq b \leq 0.1$.

c may satisfy $0.03 \leq c \leq 0.1$, specifically, $0.05 \leq c \leq 0.1$.

d may satisfy $0 \leq d \leq 0.1$, specifically, $0.01 \leq d \leq 0.05$.

a, b, and c satisfy $0 < a+b+c \leq 1$, specifically, $a+b+c=1$.

The layer-structured lithium nickel-based transition metal composite oxide may be in the form of a particle.

The layer-structured lithium nickel-based transition metal composite oxide may be in a form of a secondary particle in which a plurality of primary particles are bonded to each other. Specifically, the compound of Formula 1 may be in the form of a secondary particle in which 10 or more primary particles are bonded to each other. Accordingly, there is an effect that lithium may be uniformly intercalated into and deintercalated from the positive electrode active material.

The layer-structured lithium nickel-based transition metal composite oxide may have a $D_{50}$ of 5 μm to 15 μm, particularly 7 μm to 12 μm, and more particularly 9 μm to 10 μm. Since a positive electrode slurry is easily dispersed when the above range is satisfied, uniform coating of the positive electrode active material layer is possible.

The positive electrode active material may be included in an amount of 90 wt% to 99 wt%, particularly 92 wt% to 99 wt%, and more particularly 95 wt% to 98.5 wt% in the positive electrode active material layer.

The positive electrode active material layer may further include a positive electrode binder. The positive electrode binder improves adhesion between the positive electrode active material particles and adhesion between the positive electrode active material and the positive electrode current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used.

The positive electrode binder may be included in an amount of 0.5 wt% to 5.0 wt%, particularly 1.0 wt% to 2.5 wt%, and more particularly 1.0 wt% to 2.0 wt% in the positive electrode active material layer.

The positive electrode active material layer may further include a positive electrode conductive agent. The positive electrode conductive agent is used to provide conductivity to the electrode, wherein any conductive agent may be used without particular limitation as long as it has suitable electron conductivity without causing adverse chemical changes in the battery. Specific examples of the positive electrode conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The positive electrode conductive agent may be included in an amount of 0.5 wt% to 30.0 wt%, particularly 0.5

wt% to 10.0 wt%, and more particularly 1.0 wt% to 4.0 wt% in the positive electrode active material layer.

The positive electrode active material layer may further include a lithium by-product. The lithium by-product corresponds to a by-product which is formed by transferring a lithium metal layer to the positive electrode active material layer and rolling in a preparation process of the positive electrode. Specifically, the positive electrode active material layer may include any one selected from the group consisting of $Li_3N$, $Li_2CO_3$, and LiOH.

The positive electrode may satisfy Equation 3 below.

[Equation 3]

$$1.2 \leq I_{[003]}/I_{[200]} \leq 2.0$$

In Equation 1, $I_{[003]}$ is an integral value of a maximum peak that appears in a 2θ range of 17.0° to 19.0° during X-ray diffraction (XRD) measurement on a surface of the positive electrode active material layer, and $I_{[200]}$ is an integral value of a maximum peak that appears in a 2θ range of 43° to 45° during the XRD measurement on the surface of the positive electrode active material layer.

Specifically, the 2θ range where the maximum peak appears may be 17.5° to 18.5° and may be 17.5° to 18.2°. Also, $I_{[200]}$ is the integral value of the maximum peak that appears in a 2θ range of 43° to 45° during the XRD measurement on the surface of the positive electrode active material layer, and the 2θ range where the maximum peak appears may be 43.5° to 44.5° and may be 43.7° to 44.3°.

Also, $I_{[003]}/I_{[200]}$ of Equation 1 according to an aspect of the present disclosure may preferably be 1.21 or more, 1.22 or more, 1.23 or more, or 1.24 or more, and may preferably be 1.80 or less, 1.70 or less, 1.65 or less, 1.60 or less, or 1.58 or less.

In a case in which the above range is satisfied, since a sufficient amount of lithium may be supplied to the negative electrode during an activation process, life characteristics of the battery may be improved. Also, since an amount of the lithium by-product in the positive electrode is small, capacity of the positive electrode and long-term life characteristics of the battery may be good.

The positive electrode may further include a lithium metal layer which is disposed on the positive electrode active material layer. The lithium metal layer plays a role in supplying lithium ions to the positive electrode active material layer. Specifically, the positive electrode active material layer may be disposed between the positive electrode current collector and the lithium metal layer. The lithium metal layer may be in contact with the positive electrode active material layer. The lithium metal layer includes solid-phase lithium metal, and the lithium metal layer may specifically be formed of solid-phase lithium metal.

The positive electrode may further include a polymer layer which is disposed on the positive electrode active material layer. The polymer layer may play a role in effectively peeling off the lithium metal layer from the transfer stack and allowing the lithium metal layer to be easily transferred to the positive electrode active material layer during the preparation of the positive electrode. That is, the polymer layer may be separated from the transfer stack together with the lithium metal layer to be disposed on the positive electrode active material layer. The polymer layer may exist in contact with the positive electrode active material layer, and alternatively, the lithium metal layer may exist between the polymer layer and the positive electrode active material layer.

The polymer layer may be at least one selected from the group consisting of polyethylene terephthalate (PET), polyimide (PI), poly (methylmethacrylate) (PMMA), polypropylene, polyethylene, and polycarbonate. Accordingly, in a secondary battery including the positive electrode, since the polymer layer may be dissolved in an electrolyte solution contained in the secondary battery, an increase in resistance of the battery may be prevented. Particularly, the polymer layer may include PMMA, and, in this case, the above-described effect may be further improved.

In the positive electrode, the positive electrode active material layer may have a porosity of 10% to 40%, particularly 15% to 35%, and more particularly 25% to 30%. In this case, no additional thickness change may occur during rolling. The porosity may be confirmed by measuring apparent density and true density of the positive electrode active material layer.

A loading amount of the positive electrode active material layer may be in a range of 3 $mAh/cm^2$ to 5.5 $mAh/cm^2$, and may specifically be in a range of 4 $mAh/cm^2$ to 5 $mAh/cm^2$.

**(2) Negative Electrode**

The negative electrode may include a negative electrode current collector, a negative electrode active material layer disposed on the negative electrode current collector, and a solid electrolyte layer (SEI) disposed on the negative electrode active material layer.

The negative electrode current collector is not particularly limited as long as it has high conductivity without causing adverse chemical changes in the battery, and, for example, copper, stainless steel, aluminum, nickel, titanium,

fired carbon, copper or stainless steel that is surface-treated with one of carbon, nickel, titanium, silver, or the like, and an aluminum-cadmium alloy may be used. Also, the negative electrode current collector may typically have a thickness of 3 $\mu m$ to 500 $\mu m$, and, similar to the positive electrode current collector, microscopic irregularities may be formed on the surface of the current collector to improve the adhesion of a negative electrode active material. The negative electrode current collector, for example, may be used in various shapes such as that of a film, a sheet, a foil, a net, a porous body, a foam body, a non-woven fabric body, and the like.

The negative electrode active material layer may be disposed on one surface or both surfaces of the negative electrode current collector. The negative electrode active material layer may include negative electrode active material particles.

The negative electrode active material particle may include a silicon-based negative electrode active material particle. The silicon-based negative electrode active material particle may include at least one of Si and $SiO_x$ ($0<x<2$).

The Si is silicon particles, wherein it may be silicon particles (particles formed of silicon), so-called Pure Silicon. The silicon particles may effectively improve the capacity of the negative electrode. The $SiO_x$ ($0<x<2$) may be in a form including Si and $SiO_2$, and the Si may constitute a phase. That is, x corresponds to a number ratio of oxygen (O) to Si included in the $SiO_x$ ($0<x<2$). In a case in which the silicon-based composite particle includes the $SiO_x$ ($0<x<2$), discharge capacity of the secondary battery may be improved.

If the activation process is performed in a process of preparing the lithium secondary battery of the present disclosure, since predetermined lithium ions are transferred from the positive electrode to the silicon-based negative electrode active material of the negative electrode, an excessive volume change of the silicon-based active material during battery operation may be suppressed and life characteristics of the battery may be improved. Furthermore, since a separate lithium metal layer is not transferred to the negative electrode, the negative electrode and the lithium metal layer are not in contact with each other and the lithium ions are not directly intercalated into the negative electrode from the lithium metal layer. Thus, a phenomenon of excessive heat generation due to an alloy reaction of lithium and silicon at the negative electrode may be avoided and a possibility of ignition due to a reaction between the lithium and moisture may be significantly reduced. Furthermore, since the lithium ions are not intercalated into the negative electrode during notching and punching the negative electrode (because pre-lithiation has not progressed), a possibility of ignition during the notching and punching process may be significantly reduced. That is, in the present disclosure, it has greater significance when the negative electrode active material particle includes the silicon-based active material particle.

The negative electrode active material may further include a carbon-based negative electrode active material. The carbon-based negative electrode active material may include at least one selected from the group consisting of artificial graphite, natural graphite, and graphitized meso-carbon microbeads.

The negative electrode active material may be included in an amount of 70 wt% to 98 wt%, specifically, 80 wt% to 90 wt% in the negative electrode active material layer.

The negative electrode active material layer may further include a negative electrode binder. The negative electrode binder may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylate, an ethylene-propylene-diene monomer (EPDM), a sulfonated EPDM, a styrene-butadiene rubber (SBR), a fluorine rubber, poly acrylic acid, and a material having hydrogen thereof substituted with lithium (Li), sodium (Na), or calcium (Ca), or may include various copolymers thereof.

The negative electrode binder may be included in an amount of 5 wt% to 30 wt%, specifically, 10 wt% to 20 wt% in the negative electrode active material layer.

The negative electrode active material layer may further include a negative electrode conductive agent. The negative electrode conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; conductive tubes such as carbon nanotubes; fluorocarbon powder; metal powder such asaluminum powder, and nickel powder; conductive whiskers such as zinc oxide whiskers and potassium titanate whiskers; conductive metal oxide such as titanium oxide; or polyphenylene derivatives may be used.

The negative electrode conductive agent may be included in an amount of 1 wt% to 15 wt%, specifically, 5 wt% to 10 wt% in the negative electrode active material layer.

The negative electrode active material layer may have a porosity of 30% to 50%, specifically, 35% to 48%. In this case, a negative electrode structure may be maintained despite a large volume change of the negative electrode active material, and lithium transferred from the positive electrode may be effectively intercalated. The porosity may be confirmed by measuring apparent density and true density of the negative electrode active material layer.

A loading amount of the negative electrode active material layer may be in a range of 7 $mAh/cm^2$ to 14 $mAh/cm^2$, and may specifically be in a range of 7.5 $mAh/cm^2$ to 11.9 $mAh/cm^2$.

The solid electrolyte layer may be disposed on the negative electrode active material layer. Specifically, the negative electrode active material layer may be disposed between the solid electrolyte layer and the negative electrode current collector. Since the solid electrolyte layer suppresses an excessive decomposition reaction of the electrolyte and allows lithium ions to pass through but does not allow electrons to pass through, it plays a role in facilitating the operation of the battery.

The solid electrolyte layer may include an organic component and an inorganic component.

The organic component may include a compound of Formula 1 below.

[Formula 1]

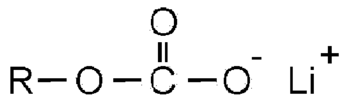

In Formula 1, R may be at least one selected from an alkyl group having 1 to 4 carbon atoms and an alkylene glycol group having 1 to 4 carbon atoms. Specifically, R may be at least one selected from the group consisting of a methyl group, an ethyl group, and an ethylene glycol group.

The inorganic component may include at least one selected from the group consisting of LiF and $Li_2CO_3$.

**(3) Separator**

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

**(4) Electrolyte**

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present disclosure is not limited thereto.

Specifically, the electrolyte may include a non-aqueous organic solvent and a metal salt.

Examples of the non-aqueous organic solvent may be aprotic organic solvents, such as N-methyl-2-pyrrolidone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

Particularly, ethylene carbonate and propylene carbonate, ring-type carbonates among the carbonate-based organic solvents, well dissociate a lithium salt in the electrolyte solution due to high dielectric constants as high-viscosity organic solvents, and thus, the ring-type carbonate may be preferably used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, such a combined use may be more preferable.

A lithium salt may be used as the metal salt, and the lithium salt is a material that is readily soluble in the non-aqueous electrolyte solution, wherein, for example, at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving the life characteristics of the battery, suppressing a decrease in battery capacity, and improving discharge capacity of the battery.

The lithium secondary battery may have an A value according to Equation 1 of 10% or more, particularly 10% to 20%, and more particularly 11% to 15%, for example, 13.5% to 15%.

[Equation 1]

$$A = \{(F+C)/(F+C+G+M+E)\} \times 100$$

wherein F and C are a content (unit: μg/cm²) of a fluoride group and a content (unit: μg/cm²) of a carbonate group, which are confirmed by capillary electrophoresis analysis of the solid electrolyte layer, respectively, and
G, M, and E are a content (unit: μg/cm²) of an ethylene glycol group, a content (unit: μg/cm²) of a methyl group, and a content (unit: μg/cm²) of an ethyl group, which are confirmed by nuclear magnetic resonance (NMR) spectroscopic analysis of the solid electrolyte layer, respectively.

In a case in which the A value is less than 10%, since the solid electrolyte layer may not effectively suppress excessive volume expansion of the negative electrode active material particles, initial capacity of the battery may be reduced due to an additional lithium side reaction.

In the process of preparing the lithium secondary battery of the present disclosure, if a rate of current applied during charge is adjusted to 0.1 C to 1.0 C, a cracking phenomenon of the negative electrode active material particles may be minimized by the lithium ions that are transferred from the positive electrode to the negative electrode active material layer. Accordingly, since the solid electrolyte layer formed on the negative electrode active material layer may contain more inorganic component, such as LiF and $Li_2CO_3$, than the organic component such as the compound of Formula 1, the A value of Equation 1 may be 10% or more. Thus, since the solid electrolyte layer may be formed robustly, damage to the negative electrode active material layer may be effectively prevented and an additional side reaction of the electrolyte solution may be effectively suppressed.

The lithium secondary battery may have an L value according to Equation 2 of 45% or more, particularly 45% to 80%, and more particularly 55% to 70%, for example, 63% to 68%.

[Equation 2]

$$L = L2/L1$$

wherein L1 and L2 are integral values of lithium peaks in a graph that is obtained from laser-induced breakdown spectroscopy (LIBS), respectively,
wherein L1 is measured at an interface between the negative electrode active material layer and the negative electrode current collector, and
L2 is measured at a point at a distance of 20% of a thickness of the negative electrode active material layer in a thickness direction from an interface between the negative electrode active material layer and the solid electrolyte layer.

Since the current is applied at an appropriate current rate during the activation process such that the lithium ions may be uniformly distributed in the negative electrode active material layer, the A value according to Equation 1 is satisfied and the L value may be 45% or more at the same time. Accordingly, the solid electrolyte layer may be formed uniformly on the negative electrode active material layer, formation of the lithium by-product in the negative electrode may be reduced, and the initial capacity and life characteristics of the battery may be improved.

**<Method of Preparing Lithium Secondary Battery>**

A method of preparing a lithium secondary battery according to another aspect of the present disclosure includes a step B1 of preparing a preliminary lithium secondary battery which includes a positive electrode including a positive electrode current collector and a positive electrode active material layer disposed on the positive electrode current collector; a negative electrode including a negative electrode current collector, a negative electrode active material layer disposed on the negative electrode current collector, and a solid electrolyte layer disposed on the negative electrode active material layer; a separator disposed between the positive electrode and the negative electrode; and the electrolyte, and a step B2 of activating the preliminary lithium secondary battery, wherein a method of preparing the positive electrode

includes a step P1 of disposing a transfer stack, which includes a base film and a lithium metal layer disposed on the base film, on a preliminary positive electrode including a preliminary positive electrode active material layer to form a positive electrode structure such that the lithium metal layer and the preliminary positive electrode active material layer are in contact with each other; a step P2 of rolling the positive electrode structure; and a step P3 of preparing a positive electrode by removing the base film from the transfer stack after the rolling, wherein step B2 may include charging the preliminary lithium secondary battery by applying a current to the preliminary lithium secondary battery at a current rate of 0.1 C to 1.0 C.

Since the positive electrode, the negative electrode, the separator, and the electrolyte are the same as the positive electrode, the negative electrode, the separator, and the electrolyte of the above-described aspect, descriptions thereof will be omitted.

**(1) Step B1**

In step B1, the preliminary lithium secondary battery may include a positive electrode and a negative electrode. Specifically, the preliminary lithium secondary battery may include a positive electrode, a negative electrode, a separator, and an electrolyte. Specifically, the positive electrode and the negative electrode are spaced apart from each other with the separator disposed therebetween and stacked, and may be impregnated with the electrolyte. The negative electrode before being subjected to the activation process may be a preliminary negative electrode, and means a state in which lithium ions have not yet been intercalated. The preliminary lithium secondary battery refers to a battery before being subjected to the activation process.

1) Step P1

Referring to FIG. 1, a transfer stack 300 may include a base film 310 and a lithium metal layer 320 disposed on the base film 310. The base film 310 may be used without limitation as long as it is a material which may withstand high-temperature conditions that occur in a process of depositing the lithium metal layer 320 on the base film 310. Specifically, the base film may include at least one selected from the group consisting of polyethylene terephthalate (PET), polyimide (PI), poly (methylmethacrylate) (PMMA), polypropylene, polyethylene, and polycarbonate.

The lithium metal layer may be disposed on the base film. The lithium metal layer plays a role in supplying lithium ions to the preliminary positive electrode active material layer. The lithium metal layer includes solid-phase lithium metal, and the lithium metal layer may specifically be formed of solid-phase lithium metal.

In the transfer stack, the lithium metal layer may have a thickness of 1 μm to 10 μm, particularly 3 μm to 9 μm, and more particularly 4 μm to 6.5 μm. In a case in which the above range is satisfied, since a degree of cracking of the positive electrode active material particles on a surface of the positive electrode may be reduced, a decrease in initial capacity of the battery may be suppressed.

A loading amount (unit: $mAh/cm^2$) of the lithium metal layer may be 4% to 40% of a loading amount (unit: $mAh/cm^2$) of the preliminary positive electrode active material layer, and may specifically be 12% to 35%, more specifically, 20% to 30%. When the above range is satisfied, since the generation of the by-product is small and lithium may be easily intercalated into the positive electrode active material, target lithium intercalation capacity may be easily achieved.

In step P1, referring to FIG. 1, a preliminary positive electrode active material layer 120' is disposed on a positive electrode current collector 110, and the transfer stack 300 may be disposed on the preliminary positive electrode active material layer 120' to form a positive electrode structure 400 such that the lithium metal layer 320 and the preliminary positive electrode active material layer are in contact with each other.

Herein, the positive electrode current collector 110 is the same as the positive electrode current collector described in the aspect related to the above-described positive electrode.

Referring to FIG. 2, the transfer stack 300 may further include a polymer layer 330. The polymer layer 330 may be disposed between the base film 310 and the lithium metal layer 320. The polymer layer may play a role in effectively peeling off the lithium metal layer from the transfer stack and allowing the lithium metal layer to be easily transferred to the positive electrode active material layer during the preparation of the positive electrode. That is, the polymer layer may be separated from the transfer stack together with the lithium metal layer to be disposed on the positive electrode active material layer. The polymer layer may exist in contact with the positive electrode active material layer, and alternatively, the lithium metal layer may exist between the polymer layer and the positive electrode active material layer.

The polymer layer may be at least one selected from the group consisting of polyethylene terephthalate (PET), polyimide (PI), poly (methylmethacrylate) (PMMA), polypropylene, polyethylene, and polycarbonate. Accordingly, in a secondary battery including the positive electrode, since the polymer layer may be dissolved in an electrolyte solution contained in the secondary battery, an increase in resistance of the battery may be prevented. Particularly, the polymer layer may include PMMA, and, in this case, the above-described effect may be further improved.

The polymer layer may have a thickness of 0.1 μm to 10 μm, particularly 0.5 μm to 5 μm, and more particularly 1

μm to 2.5 μm. In a case in which the above range is satisfied, the lithium metal layer may be easily transferred to the positive electrode active material layer, and a reverse transfer phenomenon, in which the positive electrode active material layer is transferred to the transfer stack, may be prevented.

2) Step P2

Referring to FIG. 3, in step P2, the prepared positive electrode structure 400 may be rolled. The rolling may be performed by a roll press method. Specifically, through two rolls R spaced apart from each other with a predetermined space in a vertical direction, a pressure may be applied in the vertical direction to the positive electrode structure 400 passing through the space, and the pressure may be a linear pressure. Through the rolling process, at least a portion of the lithium ions of the lithium metal layer included in the transfer stack may be intercalated into the preliminary positive electrode active material layer. In this process, the preliminary positive electrode active material layer may become a positive electrode active material layer. In FIGS. 3 and 4, it was illustrated that the lithium metal layer is included in the positive electrode, but, in a case in which the entire lithium metal layer is intercalated into the preliminary positive electrode active material layer during the rolling process, the lithium metal layer may not exist as a separate layer.

The pressure applied to the positive electrode structure during the rolling may be in a range of 10 kgf/cm to 90 kgf/cm, particularly 15 kgf/cm to 80 kgf/cm, and more particularly 20 kgf/cm to 40 kgf/cm. In a case in which the above range is satisfied, an amount of lithium transferred to the negative electrode during the activation process may be sufficient, and a cracking phenomenon of the positive electrode active material particles and the formation of the lithium by-product may be suppressed to improve positive electrode capacity and the life characteristics of the battery.

3) Step P3

Referring to FIG. 4, in step P3, a positive electrode 100 may be prepared by removing the base film 310 from the transfer stack after the rolling performed in step P2. In a case in which the polymer layer 330 is disposed between the base film 310 and the lithium metal layer 320, the base film 310 may be more easily removed by the polymer layer 330.

Also, the method of preparing a positive electrode may further include a step P4 of resting (leaving alone) the preliminary positive electrode for 1 minute to 600 minutes, specifically, 1 minute to 30 minutes. Step P4 may be performed after step P2. Specifically, step P4 may be performed in at least one step of 'between step P2 and step P3' and 'immediately after step P3'. Since reaction heat, which has been generated by a reaction of the lithium metal layer and the preliminary positive electrode active material layer in step P2, may be effectively released by step P4, lithium is uniformly intercalated into the positive electrode, and thus, there is an effect of reducing the generation of the by-product.

The method of preparing the positive electrode may further include a step P4 of resting (leaving alone) the preliminary positive electrode for 1 minute to 600 minutes, specifically, 1 minute to 30 minutes. Step P4 may be performed after step P2. Specifically, step P4 may be performed in at least one step of 'between step P2 and step P3' and 'immediately after step P3'. Since the reaction heat, which has been generated by the reaction of the lithium metal layer and the preliminary positive electrode active material layer in step P2, may be effectively released by step P4, lithium is uniformly intercalated into the positive electrode, and thus, there is an effect of reducing the generation of the by-product.

Since the prepared positive electrode is the same as the positive electrode of the above-described aspect, a detailed description thereof will be omitted.

(2) Step B2

Step B2 may include charging the preliminary lithium secondary battery by applying a current to the preliminary lithium secondary battery at a current rate of 0.1 C to 1 C.

Specifically, step B2 corresponds to a so-called "activation process". In step B2, the preliminary lithium secondary battery is charged and discharged, and through this, excess lithium ions, which are formed by the lithium metal layer and present in the positive electrode active material layer, may move to the negative electrode active material layer to achieve the pre-lithiation of the negative electrode.

When charging the preliminary lithium secondary battery in step B2, the current may be applied to the preliminary lithium secondary battery at a current rate of 0.1 C to 1 C, and, specifically, the current rate may be in a range of 0.1 C to 0.7 C, more specifically, 0.1 C to 0.3 C. In a case in which the current rate is less than 0.1 C, since an amount of lithium ions transferred from the positive electrode active material layer to the negative electrode active material layer is insufficient, it is difficult to improve the life characteristics of the battery. In a case in which the current rate is greater than 1 C, since the cracking phenomenon of the negative electrode active material particles excessively occurs and the formation of the lithium by-product in the negative electrode is increased, the initial capacity and life characteristics of the battery may be reduced.

Step B2 may be performed at a temperature of 15°C to 85°C, and may specifically be performed at a temperature

of 20°C to 60°C, more specifically, 20°C to 40°C. In a case in which the above range is satisfied, since ionic conductivity of the electrolyte is improved and a ratio of the inorganic component in the solid electrolyte layer is high, initial resistance of the battery may be decreased.

According to another aspect of the present disclosure, a battery module including the lithium secondary battery as a unit cell and a battery pack including the battery module are provided. Since the battery module and the battery pack include the lithium secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present disclosure. It will be apparent to those skilled in the art that these examples are only provided to illustrate the present disclosure and various modifications and alterations are possible within the scope and technical spirit of the present disclosure. Such modifications and alterations fall within the scope of claims included herein.

## Examples and Comparative Examples

### Example 1: Preparation of Lithium Secondary Battery

(1) Preparation of Positive Electrode

A transfer stack, which included a PET film (base film), a polymer layer (2.5 μm thick) disposed on the PET film and formed of PMMA, and a lithium metal layer (6 μm thick, loading amount of 1.24 $mAh/cm^2$) disposed on the polymer layer and formed of solid-phase lithium metal, was prepared.

$Li[Ni_{0.86}Co_{0.05}Mn_{0.08}Al_{0.01}]O_2$ was used as a positive electrode active material. The positive electrode active material was in a form of a secondary particle in which a plurality (10 or more) of $Li[Ni_{0.86}Co_{0.05}Mn_{0.08}Al_{0.01}]O_2$ primary particles were bonded to each other, and an average particle diameter $D_{50}$ of the secondary particles was 9 μm. A positive electrode, which included a preliminary positive electrode active material layer including the positive electrode active material, PVdF as a positive electrode binder, and carbon nanotubes, as a positive electrode conductive agent, at a weight ratio of 98:1:1 and an aluminum foil (thickness: 12 μm) as a positive electrode current collector, was prepared. The preliminary positive electrode active material layer had a loading amount of 4.5 $mAh/cm^2$ and a thickness of 140 μm.

The transfer stack was disposed on the preliminary positive electrode active material layer to allow the lithium metal layer to be in contact with the preliminary positive electrode active material layer.

Thereafter, the positive electrode having the transfer stack disposed thereon was rolled by a roll press method and was then left standing for 24 hours. A pressure during the rolling was 20 kgf/cm. Through this, lithium ions of the lithium metal layer were intercalated into the preliminary positive electrode active material layer to form a positive electrode active material layer. Thereafter, the base film was removed and the rolled positive electrode was left standing for 10 minutes to prepare a positive electrode including the positive electrode current collector, the positive electrode active material layer, and the polymer layer.

(2) Preparation of Preliminary Lithium Secondary Battery

Silicon particles having an average particle diameter $D_{50}$ of 5 μm was used as a negative electrode active material. A negative electrode, which included a preliminary negative electrode active material layer including the negative electrode active material, CMC as a negative electrode binder, and carbon nanotubes, as a negative electrode conductive agent, at a weight ratio of 80:10:10, was prepared. The preliminary negative electrode active material layer had a loading amount of 10 $mAh/cm^2$ and a thickness of 75 μm.

The positive electrode prepared in (1), the negative electrode, and a porous polyethylene separator were assembled using a winding method, and a preliminary lithium secondary battery was prepared by injecting an electrolyte (ethylene carbonate (EC)/ethylmethyl carbonate (EMC) = 3/7 (volume ratio) and lithium hexafluorophosphate ($LiPF_6$ 1 M) into the assembled battery and leaving the assembled battery alone for 48 hrs.

(3) Preparation of Lithium Secondary Battery

The preliminary lithium secondary battery was charged to 4.2 V by applying a current at a current rate of 0.1 C at 25°C and then discharged at 0.5 C to 2.5 V to perform an activation process.

### Examples 2 to 5 and Comparative Examples 1 and 2: Preparation of Lithium Secondary Batteries

Lithium secondary batteries of Examples 2 to 5 and Comparative Examples 1 and 2 were prepared in the same

manner as in Example 1 except that the rate of the current applied during the charging of the preliminary lithium secondary battery (charging in the activation process) was modified as shown in Table 1.

**Comparative Example 3: Preparation of Lithium Secondary Battery**

A transfer stack, which included a PET film (base film), a polymer layer (2.5 μm thick) disposed on the PET film and formed of PMMA, and a lithium metal layer (6 μm thick, loading amount of 1.24 $mAh/cm^2$) disposed on the polymer layer and formed of solid-phase lithium metal, was prepared.

Silicon particles having an average particle diameter $D_{50}$ of 5 μm was used as a negative electrode active material. A negative electrode, which included a preliminary negative electrode active material layer including the negative electrode active material, carboxymethylcellulose (CMC) as a negative electrode binder, and carbon nanotubes, as a negative electrode conductive agent, at a weight ratio of 80:10:10, was prepared. The preliminary negative electrode active material layer had a loading amount of 10 $mAh/cm^2$ and a thickness of 75 μm.

The transfer stack was disposed on the preliminary negative electrode active material layer to allow the lithium metal layer to be in contact with the preliminary negative electrode active material layer.

Thereafter, the negative electrode having the transfer stack disposed thereon was rolled by a roll-to-roll method and was then left standing for 24 hours. Through this, lithium ions of the lithium metal layer were intercalated into the preliminary negative electrode active material layer to form a negative electrode active material layer. A pressure during the rolling was 50 kgf/cm.

Thereafter, a negative electrode including the negative electrode current collector, the negative electrode active material layer, and the polymer layer was prepared by removing the base film.

(2) Preparation of Preliminary Lithium Secondary Battery

$Li[Ni_{0.86}Co_{0.05}Mn_{0.08}Al_{0.01}]O_2$ was used as a positive electrode active material. The positive electrode active material was in a form of a secondary particle in which a plurality (10 or more) of $Li[Ni_{0.86}Co_{0.05}Mn_{0.08}Al_{0.01}]O_2$ primary particles were bonded to each other, and an average particle diameter $D_{50}$ of the secondary particles was 9 μm. A positive electrode was prepared in which a preliminary positive electrode active material layer including the positive electrode active material, PVdF as a positive electrode binder, and carbon nanotubes, as a positive electrode conductive agent, at a weight ratio of 98:1:1 was disposed on an aluminum foil (thickness: 12 μm). The preliminary positive electrode active material layer had a loading amount of 4.5 $mAh/cm^2$ and a thickness of 140 μm.

The negative electrode prepared in (1), the positive electrode, and a porous polyethylene separator were assembled using a winding method, and a preliminary lithium secondary battery was prepared by injecting an electrolyte (ethylene carbonate (EC)/ethylmethyl carbonate (EMC) = 1/2 (volume ratio) and lithium hexafluorophosphate ($LiPF_6$ 1 M) into the assembled battery.

(3) Preparation of Lithium Secondary Battery

The preliminary lithium secondary battery was charged to 4.2 V by applying a current at a current rate of 1.0 C at 25°C and then discharged at 0.5 C to 2.5 V to perform an activation process.

**Comparative Example 4: Preparation of Lithium Secondary Battery**

(1) Preparation of Positive Electrode

$Li[Ni_{0.86}Co_{0.05}Mn_{0.08}Al_{0.01}]O_2$ was used as a positive electrode active material. The positive electrode active material was in a form of a secondary particle in which a plurality (10 or more) of $Li[Ni_{0.86}Co_{0.05}Mn_{0.08}Al_{0.01}]O_2$ primary particles were bonded to each other, and an average particle diameter $D_{50}$ of the secondary particles was 9 μm. A positive electrode, which included a preliminary positive electrode active material layer including the positive electrode active material, PVdF as a positive electrode binder, and carbon nanotubes, as a positive electrode conductive agent, at a weight ratio of 98:1:1 and an aluminum foil (thickness: 12 μm) as a positive electrode current collector, was prepared. The preliminary positive electrode active material layer had a loading amount of 4.5 $mAh/cm^2$ and a thickness of 140 μm.

The positive electrode and a lithium metal counter electrode facing the positive electrode were prepared, a polyethylene separator was disposed between the positive electrode and the lithium metal counter electrode, and an electrolyte (ethylene carbonate (EC)/ethyl methyl carbonate (EMC) = 3/7 (volume ratio), lithium hexafluorophosphate ($LiPF_6$ 1 M)) was injected to prepare a cell for pre-lithiation.

An electrochemical charger/discharger was connected to the cell for pre-lithiation, and the positive electrode was overlithiated by electrochemically charging the cell for pre-lithiation at 0.1 C to reach 120% of charge capacity of the

positive electrode.

(2) Preparation of Preliminary Lithium Secondary Battery

Silicon particles having an average particle diameter $D_{50}$ of 5 μm was used as a negative electrode active material. A negative electrode, which included a preliminary negative electrode active material layer including the negative electrode active material, CMC as a negative electrode binder, and carbon nanotubes, as a negative electrode conductive agent, at a weight ratio of 80:10:10, was prepared. The preliminary negative electrode active material layer had a loading amount of 10 $mAh/cm^2$ and a thickness of 75 μm.

The positive electrode prepared in (1), the negative electrode, and a porous polyethylene separator were assembled using a winding method, and a preliminary lithium secondary battery was prepared by injecting an electrolyte (ethylene carbonate (EC)/ethylmethyl carbonate (EMC) = 3/7 (volume ratio), lithium hexafluorophosphate ($LiPF_6$ 1 M)) into the assembled battery and leaving the assembled battery alone for 48 hrs.

(3) Preparation of Lithium Secondary Battery

The preliminary lithium secondary battery was charged to 4.2 V by applying a current at a current rate of 1.0 C at 25°C and then discharged at 0.5 C to 2.5 V to perform an activation process.

**Experimental Example 1: Confirmation of A value**

A values of the lithium secondary batteries of the examples and the comparative examples were confirmed in the following manner.

[Equation 1]

$$A = \{(F+C)/(F+C+G+M+E)\} \times 100$$

wherein F and C were a content (unit: $\mu g/cm^2$) of a fluoride group and a content (unit: $\mu g/cm^2$) of a carbonate group, which were confirmed by performing capillary electrophoresis (CE) analysis on the solid electrolyte layer, respectively, and G, M, and E were a content (unit: $\mu g/cm^2$) of an ethylene glycol group, a content (unit: $\mu g/cm^2$) of a methyl group, and a content (unit: $\mu g/cm^2$) of an ethyl group, which were confirmed by nuclear magnetic resonance (NMR) spectroscopic analysis of the solid electrolyte layer, respectively.

**Experimental Example 2: Confirmation of L value**

L values of the lithium secondary batteries of the examples and the comparative examples were confirmed in the following manner.

$$L = L2/L1$$

wherein L1 and L2 were integral values of lithium peaks in a graph that was obtained from laser-induced breakdown spectroscopy (LIBS), respectively,
wherein L1 was measured at an interface between the negative electrode active material layer and the negative electrode current collector, and
L2 was measured at a point at a distance of 20% of a thickness of the negative electrode active material layer in a thickness direction from an interface between the negative electrode active material layer and the solid electrolyte layer.

**Experimental Example 3: Confirmation of Initial Capacity**

Initial capacities of the lithium secondary batteries of the examples and the comparative examples were confirmed in the following manner.

Specifically, the lithium secondary battery was charged at a current rate of 1 C to 4.2 V and discharged at a current rate of 0.5 C to 2.5 V to confirm capacity during the discharge.

**Experimental Example 4: Confirmation of Initial Resistance**

Initial resistances of the lithium secondary batteries of the examples and the comparative examples were confirmed in the following manner.

After charging and discharging the lithium secondary battery, the lithium secondary battery was fully charged again and then discharged to a state of charge (SOC) of 50%. Thereafter, a 2.5 C pulse current was applied for 30 seconds, and a resistance value was obtained by dividing a difference between a voltage before applying the current and a voltage 10 seconds after applying the current by a current value.

**Experimental Example 5: Confirmation of Capacity Retention**

Capacity retentions were confirmed in the following manner by charging and discharging the lithium secondary batteries of the examples and the comparative examples, respectively.

Charging conditions: Charged at a current rate of 1 C to 4.2 V

Discharging conditions: Discharged at a current rate of 0.5 C to 3.0 V

Each capacity retention was derived by the following calculation.

Capacity retention (%) = ($100^{th}$ discharge capacity/$1^{st}$ discharge capacity) $\times$ 100

[Table 1]

| | Curren t rate | Tempe ratur e (°C) | A value (%) | L value (%) | Initial capacit y (mAh) | Initial resista nce (mohm) | Capaci ty retent ion (%) |
|---|---|---|---|---|---|---|---|
| Example 1 | 0.1 C | 25 | 13.633 | 66 | 160.1 | 89.6 | 95.5 |
| Example 2 | 0.33 C | 25 | 13.158 | 60 | 159.2 | 90.1 | 95 |
| Example 3 | 0.33 C | 55 | 13.098 | 58 | 160.0 | 89.6 | 94.5 |
| Example 4 | 0.5 C | 25 | 13.076 | 50 | 158.8 | 91.1 | 94 |
| Example 5 | 1.0 C | 25 | 12.982 | 47 | 158.5 | 91.9 | 93.5 |
| Comparative Example 1 | 0.01 C | 25 | 5.618 | 65 | 155.1 | 100.8 | 90 |
| Comparative Example 2 | 1.5 C | 25 | 4.709 | 40 | 141.6 | 105.4 | 88.5 |
| Comparative Example 3 | 1.0 C | 25 | 8.505 | 50 | 156.2 | 95.5 | 89.5 |
| Comparative Example 4 | 1.0 C | 25 | 9.435 | 65 | 150.5 | 98.6 | 87.5 |

Referring to Table 1, with respect to Examples 1 to 5 having an A value of 10% or more, it may be understood that they had higher initial capacities and capacity retentions and lower battery resistances than Comparative Examples 1 and 2 having an A value of less than 10%. Also, with respect to Comparative Example 3 in which pre-lithiation was performed on the negative electrode, the A value was lower than 10% as an organic component in a solid electrolyte layer was increased while a cracking phenomenon of the negative electrode active material particles excessively occurred on a surface of the negative electrode, and it may be confirmed that resistance was high due to the thin and non-uniform initial solid electrolyte layer and the resulting problems of reduced capacity and lifetime also occurred.

In addition, with respect to Comparative Example 4 in which lithium was intercalated into the positive electrode through an electrochemical method using a pre-lithiation method, it may be understood that, since a content of inorganic component in a solid electrolyte layer was low unlike the transfer method according to the present disclosure, it was difficult to form a thin and robust solid electrolyte layer, and, accordingly, it may be confirmed that it had unfavorable effects in terms of capacity and life characteristics.

[Description of the Symbols]

300: Transfer Stack
310: Base Film
320: Lithium Metal Layer
330: Polymer Layer
100: Positive Electrode
110: Positive Electrode Current Collector
120': Preliminary Positive Electrode Active Material Layer
400: Positive Electrode Structure
R: Roll

## Claims

**1.** A lithium secondary battery comprising:

a positive electrode including a positive electrode current collector and a positive electrode active material layer disposed on the positive electrode current collector;
a negative electrode including a negative electrode current collector, a negative electrode active material layer disposed on the negative electrode current collector, and a solid electrolyte layer disposed on the negative electrode active material layer;
a separator disposed between the positive electrode and the negative electrode; and
the electrolyte,
wherein an A value according to Equation 1 is 10% or more,

[Equation 1]

$$A = \{(F+C)/(F+C+G+M+E)\} \times 100$$

wherein F and C are a content (unit: $\mu g/cm^2$) of a fluoride group and a content (unit: $\mu g/cm^2$) of a carbonate group, which are confirmed by capillary electrophoresis analysis of the solid electrolyte layer, respectively, and
G, M, and E are a content (unit: $\mu g/cm^2$) of an ethylene glycol group, a content (unit: $\mu g/cm^2$) of a methyl group, and a content (unit: $\mu g/cm^2$) of an ethyl group, which are confirmed by nuclear magnetic resonance (NMR) spectroscopic analysis of the solid electrolyte layer, respectively.

**2.** The lithium secondary battery of claim 1, wherein an L value according to Equation 2 is 45% or more,

[Equation 2]

$$L = L2/L1$$

wherein L1 and L2 are integral values of lithium peaks in a graph that is obtained from laser-induced breakdown spectroscopy (LIBS), respectively,
wherein L1 is measured at an interface between the negative electrode active material layer and the negative electrode current collector, and
L2 is measured at a point at a distance of 20% of a thickness of the negative electrode active material layer in a thickness direction from an interface between the negative electrode active material layer and the solid electrolyte layer.

**3.** The lithium secondary battery of claim 1, wherein the negative electrode active material layer comprises negative electrode active material particles, and
the negative electrode active material particle comprises a silicon-based negative electrode active material particle.

**4.** The lithium secondary battery of claim 1, wherein Equation 3 is satisfied,

[Equation 3]

$$1.2 \leq I_{[003]}/I_{[200]} \leq 2.0$$

wherein, in Equation 3,
$I_{[003]}$ is an integral value of a maximum peak that appears in a 2θ range of 17.0° to 19.0° during X-ray diffraction (XRD) measurement on a surface of the positive electrode active material layer, and
$T_{[200]}$ is an integral value of a maximum peak that appears in a 2θ range of 43° to 45° during the XRD measurement on the surface of the positive electrode active material layer.

**5.** The lithium secondary battery of claim 1, wherein the positive electrode active material layer comprises at least one selected from the group consisting of $Li_3N$, $Li_2CO_3$, and LiOH.

**6.** The lithium secondary battery of claim 1, wherein the positive electrode further comprises a lithium metal layer which is disposed on the positive electrode active material layer.

**7.** A method of preparing a lithium secondary battery, the method comprising:

a step B1 of preparing a preliminary lithium secondary battery which includes a positive electrode including a positive electrode current collector and a positive electrode active material layer disposed on the positive electrode current collector; a negative electrode including a negative electrode current collector, a negative electrode active material layer disposed on the negative electrode current collector, and a solid electrolyte layer disposed on the negative electrode active material layer; a separator disposed between the positive electrode and the negative electrode; and the electrolyte, and
a step B2 of activating the preliminary lithium secondary battery,
wherein a method of preparing the positive electrode comprises
a step P1 of disposing a transfer stack, which includes a base film and a lithium metal layer disposed on the base film, on a preliminary positive electrode including a preliminary positive electrode active material layer to form a positive electrode structure such that the lithium metal layer and the preliminary positive electrode active material layer are in contact with each other;
a step P2 of rolling the positive electrode structure; and
a step P3 of preparing a positive electrode by removing the base film from the transfer stack after the rolling,
wherein step B2 comprises charging the preliminary lithium secondary battery by applying a current to the preliminary lithium secondary battery at a current rate of 0.1 C to 1 C.

**8.** The method of claim 7, wherein the current rate of the current applied to the preliminary lithium secondary battery in step B2 is in a range of 0.1 C to 0.7 C.

**9.** The method of claim 7, wherein step B2 is performed at a temperature of 15°C to 85°C.

**10.** The method of claim 7, further comprising a step P4 of leaving the preliminary positive electrode alone for 1 minute to 600 minutes after step P2.

**11.** The method of claim 7, wherein, in step P2,
the rolling is performed by a roll press method.

**12.** The method of claim 7, wherein the lithium metal layer has a thickness of 1 μm to 10 um.

**13.** The method of claim 7, wherein a loading amount of the lithium metal layer is 4% to 40% of a loading amount of the preliminary positive electrode active material layer.

**14.** The method of claim 7, wherein the transfer stack further comprises a polymer layer, and
the polymer layer is disposed between the base film and the lithium metal layer.

**15.** The method of claim 7, wherein a pressure applied to the positive electrode structure during the rolling is in a range of 10 kgf/cm to 90 kgf/cm.

FIG. 1

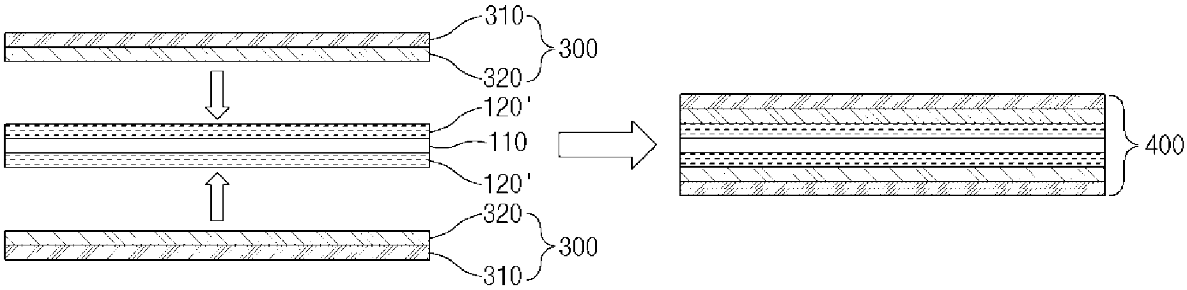
310
300
320
120'
110
120'
320
300
310
400

FIG. 2

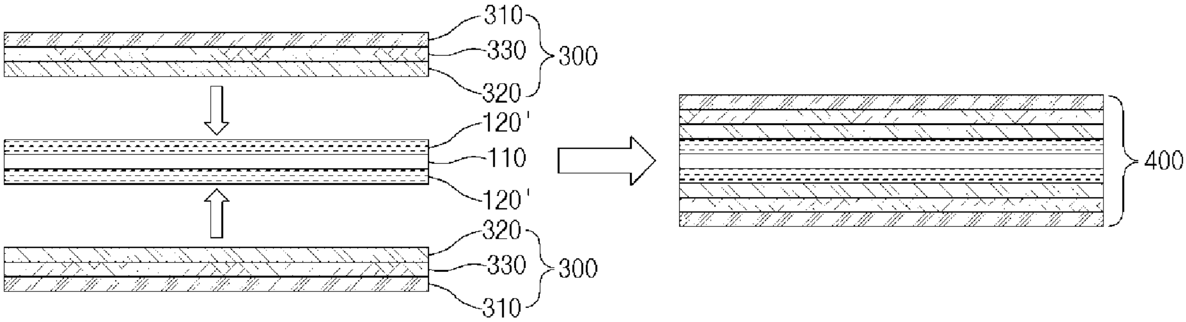
310
330
300
320
120'
110
120'
320
330
300
310
400

FIG. 3

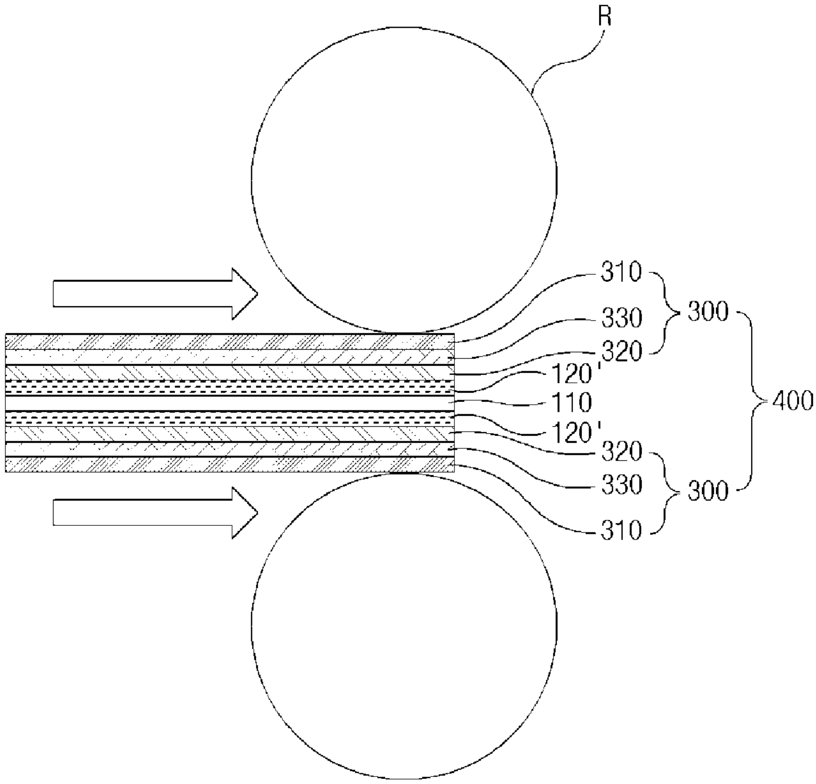
R
310
330
320
300
120'
110
120'
400
320
330
300
310

FIG. 4

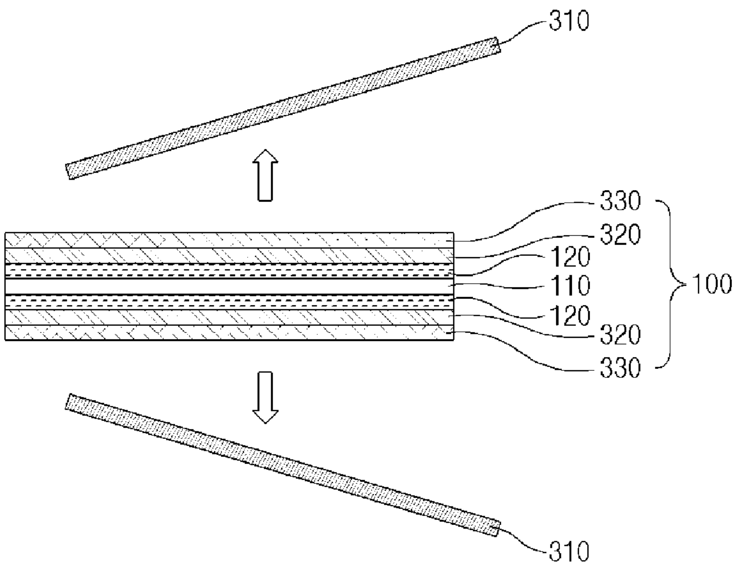
310
330
320
120
110
120
320
330
100
310

**INTERNATIONAL SEARCH REPORT**

International application No.
**PCT/KR2023/012229**

**A. CLASSIFICATION OF SUBJECT MATTER**

**H01M 10/058**(2010.01)i; **H01M 4/131**(2010.01)i; **H01M 4/1391**(2010.01)i; **H01M 4/04**(2006.01)i; **H01M 10/052**(2010.01)i; **H01M 4/38**(2006.01)i

According to International Patent Classification (IPC) or to both national classification and IPC

**B. FIELDS SEARCHED**

Minimum documentation searched (classification system followed by classification symbols)

H01M 10/058(2010.01); H01M 10/052(2010.01); H01M 10/0525(2010.01); H01M 10/0567(2010.01); H01M 10/0569(2010.01); H01M 10/40(2006.01); H01M 4/02(2006.01); H01M 4/1395(2010.01); H01M 4/38(2006.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체 전해질 계면 (solid electrolyte interphase), 분리막 (separator), 리튬 금속 (lithium metal), 규소 (silicon), 이차전지 (secondary battery)

**C. DOCUMENTS CONSIDERED TO BE RELEVANT**

| Category* | Citation of document, with indication, where appropriate, of the relevant passages | Relevant to claim No. |
|---|---|---|
| X | KR 10-2016-0055084 A (A123 SYSTEMS, LLC) 17 May 2016 (2016-05-17) See abstract; claims 1, 4, 8 and 10; and paragraphs [0011], [0034], [0089], [0103], [0132], [0146], [0148], [0154] and [0166]. | 1-4 |
| Y | | 5,6 |
| Y | KR 10-2022-0116241 A (POSCO HOLDINGS INC. et al.) 22 August 2022 (2022-08-22) See claim 1. | 5 |
| Y | JP 2004-087251 A (NEC CORP.) 18 March 2004 (2004-03-18) See abstract; claim 1; and figure 1. | 6 |
| A | KR 10-2258758 B1 (LG ENERGY SOLUTION, LTD.) 07 June 2021 (2021-06-07) See entire document. | 1-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 December 2023** | **21 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/012229**

**C. DOCUMENTS CONSIDERED TO BE RELEVANT**

| Category* | Citation of document, with indication, where appropriate, of the relevant passages | Relevant to claim No. |
|---|---|---|
| A | JP 2001-023693 A (SONY CORP.) 26 January 2001 (2001-01-26)<br>See entire document. | 1-6 |

Form PCT/ISA/210 (second sheet) (July 2022)

**INTERNATIONAL SEARCH REPORT**

International application No.
**PCT/KR2023/012229**

**Box No. III Observations where unity of invention is lacking (Continuation of item 3 of first sheet)**

This International Searching Authority found multiple inventions in this international application, as follows:

The invention of group 1: claims 1-6 pertain to a lithium secondary battery which comprises an anode, which includes a positive electrode current collector and a positive electrode active material layer disposed on the positive electrode current collector, a cathode, which includes a negative electrode current collector, negative electrode active material layer disposed on the negative electrode current collector, and a solid electrolyte membrane disposed on the negative electrode active material layer, a separator, which is disposed between the anode and the cathode, and an electrolyte, and which has A value according to Equation 1 of 10% or more,

[Equation 1]
In A={(F+C)/(F+C+G+M+E)}*100, F and C represent the content of a fluoride group (unit: μm/cm2) and the content of carbonate (unit: μm/cm2), respectively, confirmed by performing capillary electrophoresis on the solid electrolyte membrane, and G, M, and E represent the content of an ethylene glycol group (unit: μg/cm2), the content of a methyl group (unit: μg/cm2), and the content of an ethyl group (unit: μg/cm2), respectively, confirmed by performing nuclear magnetic resonance analysis for the solid electrolyte membrane.

The invention of group 2: claims 7-15 pertain to a lithium secondary battery manufacturing method comprising step B1 of preparing a preliminary lithium secondary battery comprising an anode, which includes a positive electrode current collector and a positive electrode active material layer disposed on the positive electrode current collector, a cathode, which includes a negative electrode current collector, negative electrode active material layer disposed on the negative electrode current collector, a separator disposed between the anode and the cathode, and an electrolyte, and step B2 of activating the preliminary lithium secondary battery, wherein the method of manufacturing the anode comprises step P1 of forming an anode structure by disposing a transfer laminate, which includes a base film and a lithium metal layer located on the base film, on a preliminary positive electrode including a preliminary positive electrode active material layer, such that the lithium metal layer and the preliminary positive electrode active material layer come in contact with each other, step P2 of rolling the anode structure, and step P3 of manufacturing the anode by removing the base film from the transfer laminate, wherein, in step B2, the preliminary lithium secondary battery is charged by applying current to the preliminary lithium secondary battery at a current rate of 0.1 C to 1 C.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-6**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/KR2023/012229**

| Patent document cited in search report | Publication date (day/month/year) | Patent family member(s) | Publication date (day/month/year) |
|---|---|---|---|
| KR 10-2016-0055084 A | 17 May 2016 | CN 105591149 A | 18 May 2016 |
| | | CN 105591149 B | 05 January 2021 |
| | | CN 105591150 A | 18 May 2016 |
| | | CN 112652806 A | 13 April 2021 |
| | | DE 102015014294 A1 | 12 May 2016 |
| | | DE 202015008915 U1 | 19 February 2016 |
| | | JP 2016-105394 A | 09 June 2016 |
| | | JP 2016-111005 A | 20 June 2016 |
| | | JP 2020-161505 A | 01 October 2020 |
| | | JP 6824603 B2 | 03 February 2021 |
| | | KR 10-2016-0055083 A | 17 May 2016 |
| | | TW 201635626 A | 01 October 2016 |
| | | US 10141605 B2 | 27 November 2018 |
| | | US 10270129 B2 | 23 April 2019 |
| | | US 11196085 B2 | 07 December 2021 |
| | | US 2015-0064549 A1 | 05 March 2015 |
| | | US 2016-0087310 A1 | 24 March 2016 |
| | | US 2019-181503 A1 | 13 June 2019 |
| | | WO 2013-188594 A2 | 19 December 2013 |
| | | WO 2013-188594 A3 | 13 February 2014 |
| KR 10-2022-0116241 A | 22 August 2022 | CN 114846649 A | 02 August 2022 |
| | | EP 4080608 A2 | 26 October 2022 |
| | | JP 2023-508026 A | 28 February 2023 |
| | | JP 7333477 B2 | 24 August 2023 |
| | | US 2023-0039543 A1 | 09 February 2023 |
| | | WO 2021-125882 A2 | 24 June 2021 |
| | | WO 2021-125882 A3 | 12 August 2021 |
| JP 2004-087251 A | 18 March 2004 | JP 4196398 B2 | 17 December 2008 |
| KR 10-2258758 B1 | 07 June 2021 | CN 110603670 A | 20 December 2019 |
| | | CN 110603670 B | 18 April 2023 |
| | | EP 3595053 A1 | 15 January 2020 |
| | | EP 3595053 B1 | 01 December 2021 |
| | | KR 10-2019-0071618 A | 24 June 2019 |
| | | US 11489191 B2 | 01 November 2022 |
| | | US 2020-0119393 A1 | 16 April 2020 |
| | | WO 2019-117669 A1 | 20 June 2019 |
| JP 2001-023693 A | 26 January 2001 | JP 4560851 B2 | 13 October 2010 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220106403